# EUROPEAN PATENT APPLICATION

(11) **EP 0 806 646 A2**
(43) Date of publication of application: **12.11.1997**
(21) Application number: 97302978.8
(22) Date of filing: 01.05.1997
(51) Int. Cl.: G01N 1/00, B01L 7/00

(54) **Method and apparatus for heating and dispensing a liquid sample**

(30) Priority: 06.05.1996 US 16942; 12.11.1996 US 747045
(71) Applicant: HELENA LABORATORIES CORPORATION, Beaumont Texas 77704-0752 (US)
(72) Inventor: Golias, Tipton L., Beaumont, Texas 77704-0752 (US); Mayes, Ronald A., Beaumont, Texas 77704-0752 (US)
(74) Representative: W.P. Thompson & Co.

(57) **Abstract**

The present specification describes the use of flame-free heat to safely dispense hazardous biological and chemical samples from a container (200) such as a test tube. Heat is applied to an inverted container (200) having a cannula (300) which passes through the cover (220) of the container (200). The heat causes expansion of the contents of the container (200) creating a positive pressure differential between the inside of the container (200) and the outside of the container (200), forcing the contents of the container (200) to flow through the cannula (300). A flame-free heating element (70) is connected to a power source (60) to heat the container (200).

## Description

The present invention relates to a method and apparatus for use in dispensing a liquid sample.

More particularly, the present invention is directed to heating biological and chemical substances and dispensing biological and chemical samples from a container, such as a test tube. The present invention has particular application to medical and laboratory diagnostics. It is often necessary to perform testing and analysis of biological and chemical substances which are routinely stored within conventional containers such as test tubes. The invention further relates to the dispensing of hazardous liquids from containers without a risk of exposure to the technician who is handling the container. Therefore, the invention is generally related to the field of laboratory and worker safety.

In performing certain laboratory tests on chemical or biological substances, it is often necessary to apply heat to the substance undergoing testing. It may be necessary to safely dispense portions of a liquid from a container onto a glass slide without contaminating the liquid and without exposing the technician to liquid, which may be hazardous.

Methods currently exist for heating the contents of containers. For example, bunsen burners are often used to apply heat to test tubes, beakers, crucibles and other containers. However, these heating methods and apparatus are cumbersome and the heat may be far in excess of what is needed. Further, there may be circumstances where it is not desired to have a flame in a laboratory environment.

When dispensing liquid samples from containers, it is often necessary to isolate the liquid sample from the laboratory technician for safety reasons, such as where the sample is a hazardous or infectious substance. Another reason to isolate the sample from the technician is to prevent contamination of the sample. Certain tests require the technician to "place" a liquid sample on a glass slide. For example, placing the blood on a slide or substrate is an important step that is required for many hematologic diagnoses. It is undesirable to expose a technician to the blood, since it may contain a disease, infection or virus, such as the HIV virus.

According to the present invention there is provided a method of dispensing a liquid sample from within a container closed by a stopper at one end comprising the steps of:
piercing the stopper with a cannula to equalize the pressure inside the container with the pressure external to the container; and
increasing the pressure inside the container relative to the pressure external to the container by creating a flame-free temperature differential between the inside of the container and the outside of the container, thereby causing at least some of the liquid to flow through the cannula.

According to a further feature of the present invention there is provided an apparatus for generating heat, for heating a test tube comprising:
an electrically actuated, flame-free heating element for contacting the test tube;
a power source, in electrical communication with the flame-free heating element; and
a thermally insulated support for the flame-free heating element.

The present invention thus provides a unique, flame-free heater to allow laboratory technicians to easily heat samples which are to be tested, and to monitor samples which are undergoing testing, as well as monitor the testing procedures. The present invention may thus be used to safely dispense samples of liquid onto a glass slide without the application of physical force.

In accordance with one aspect of the invention, a heating element is placed on a finger of a laboratory technician and the finger of the technician is moved into contact with, or in the vicinity of, the sample to be heated. The heating element, which is flame-free, is insulated from the finger of the laboratory technician and energized by a portable power source, such as a battery. The power source may be located on a hand covering such as a glove or wrist support worn by the technician.

Another aspect of the present invention is to provide an inexpensive, portable, heating element which is easily use to heat samples, and which is safe yet powerful enough to provide the necessary amount of heat.

The heating element may be used to safely dispense hazardous biological and chemical samples, without the application of physical force. In one embodiment, a cannula is inserted though a rubber stopper of a sealed container, such as a test tube. The container is then inverted and placed over the surface on which the liquid is to be dispensed. Because pressure is equalized, the liquid within the container does not immediately dispense through the cannula. The heating element of the present invention is then applied to the exterior surface of the container. As the heat is conducted through the container wall, the temperature of the contents will increase and the volume of the contents will expand. A positive pressure differential is created between the inside of the container and the outside of the container by the expanding volume of the contents within the container. This pressure differential forces some of the liquid from inside the container to flow through the cannula.

If the contents of the container are maintained at a temperature below body temperature, such as room temperature, the body heat from the hand of the technician may provide a sufficient temperature gradient to cause liquid from the container to be dispensed through the cannula. The effectiveness of this technique is increased by refrigerating the container and its contents prior to applying heat.

It is an aspect of the invention to provide a method and apparatus to safely dispense hazardous samples.

It is another aspect of the invention to provide a method and apparatus to safely dispense blood which is suspected of carrying a disease or infection, including the HIV virus, without the application of force.

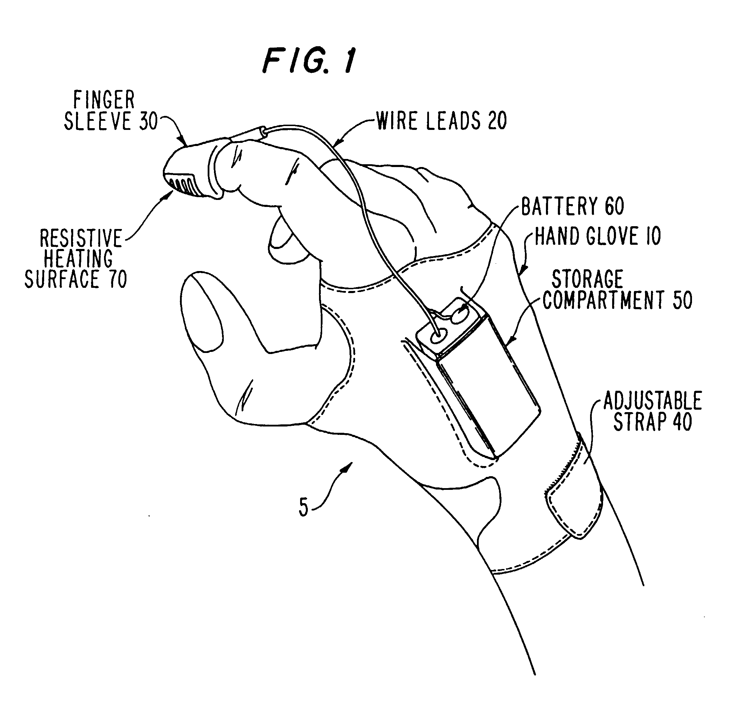

The aspects and advantages of the present invention, together with other advantages which may be attained by its use, will become more apparent upon reading the following detailed description of the invention, which is given by way of example, with reference to the accompanying drawings, wherein like reference numerals identify corresponding components, and in which: -
Figure 1 is a diagrammatic illustration of one embodiment of heating apparatus for use in the present invention;

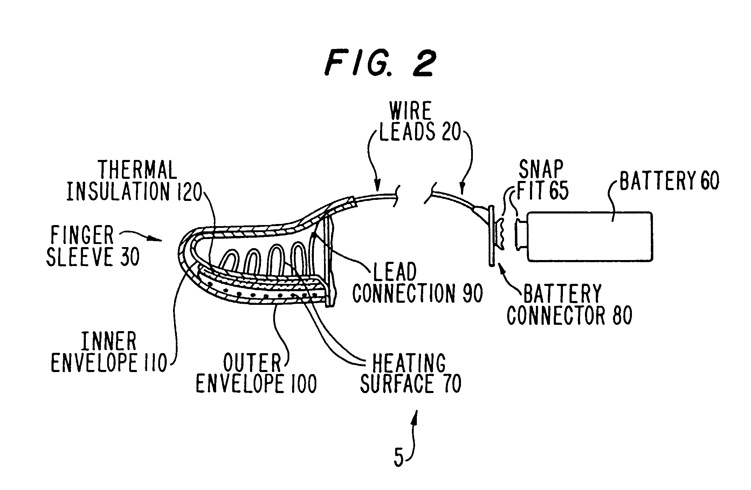

Figure 2 is a diagrammatic, partially cross-sectional illustration of the construction of the embodiment of Figure 1;
Figure 3 is a diagrammatic illustration of the method and apparatus of the embodiment shown in Figures 1 and 2 used to apply heat to a liquid sample;
Figures 4, 5, 6 and 7 are cross-sectional illustrations of the method and apparatus whereby the heating apparatus of Figures 1 and 2 is used to safely dispense a hazardous substance from a storage container; and
Figure 8 is a cross-sectional illustration of the method and apparatus of an alternative embodiment of safely dispensing a hazardous substance from a storage container, where the body heat from the hand of a technician is used to apply heat to the storage container.

Referring to the accompanying drawings, heating apparatus 5 used in the present invention includes a glove 10, flexible and insulated wire leads 20 and finger sleeve 30. The wire leads 20 are preferably flexible and insulated. The glove 10 covers the palm and back of the hand and includes an adjustable strap 40 so that the glove may be snugly secured over the hand. The strap may be of the hook and loop type fastener or other conventional design. The glove 10 also contains a storage compartment 50 to hold an energy source in the form of a battery 60, although other energy sources may be alternatively employed.

The finger sleeve 30 includes a resistive heating surface 70 which generates heat in response to the energy from the battery 60. Preferably, the resistive heating surface 70 is constructed of a material such as Kapton® which provides suitable heat in response to a low (9 volt) voltage from the battery 60. The battery 60 is connected through a snap-fit connector 65 to wire leads 20. The wire leads 20 connect through lead connection 90 to heating surface 70 at the finger sleeve 30. The lead connection 90 is permanent, as by crimping or soldering, or alternatively may be removable as with a mating plug. In the finger sleeve 30, an outer latex envelope 100 and inner latex envelope 110 surround the heating surface 70. Thermal insulation 120 is placed between the inner envelope 110 and the heating surface 70. The finger of the laboratory technician is thus insulated fran any heat generated by the heating element by thermal insulation 120. The thermal insulation 120 is preferably foam or other conventional insulation.

Current flows from battery 60 through battery connector 80 and along wire leads 20 and the heating surface 70 increases in temperature. The heat from surface 70 radiates through the outer envelope 100, and the technician may heat samples by merely touching the outer envelope 100 to the sample, or placing the outer envelope 100 in close proximity to the sample. The heating surface 70 is preferably contoured such that it conforms to surfaces which are perpendicular or parallel to the finger of the laboratory technician.

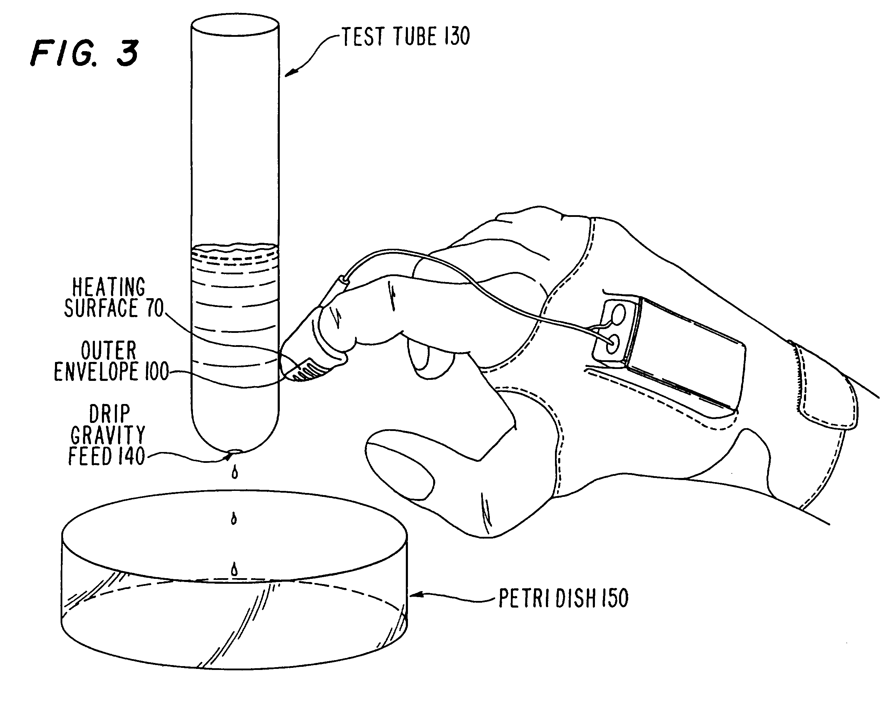

Figure 3 is an example of use of the apparatus with a test tube 130 which has a drip gravity feed 140, and where the fluid is received in a petri dish 150. If it is desired to heat the contents of the test tube 130, to immediately obtain fluid for testing purposes, it is undesirable to use a conventional burner. This is because conventional burners are impractical in that the burner would have to be set up at the test tube location and adjusted to provide the proper temperature at the proper distance. Additionally, a burner would require proper orientation to prevent drops from the test tube from falling into the burner itself. Of course the flame from the burner, if not carefully controlled, could crack or break the test tube.

Using the present invention, the laboratory technician touches the outer envelope 100 of heating surface 70 to the test tube. The heat transfer causes the temperature of the contents of the test tube to rise and the drops of liquid are dispensed at an accelerated rate. When the heating surface 70 is removed, the liquid cools to ambient temperature and resumes its prior output rate.

There are other advantages of the present invention. If the biological sample is stored below room (ambient) temperature, the use of the present invention quickly increases the temperature of the sample to ambient temperature for dispensing of the sample. Thus one laboratory technician may monitor numerous experiments in a quick and efficient manner, simply by contacting various containers with the heated finger sleeve. It should be appreciated that in addition to contacting the test tube or container with the heated finger sleeve, the present invention contemplates alterative methods for heating the sample. For example, the heating element may be placed on the palm portion of the glove 10, rather than on a finger sleeve 30. The finger sleeve 30 may be supplied in a sterile packaging prior to use, to ensure that the sample is not contaminated. Multiple finger sleeves connected to one or more power sources may be used such that more than one finger sleeve contains a heating surface. As is known in the art, a control may be installed to vary the current from the power source and consequently the temperature of the heating surface 70. An on/off switch may also be provided to the heating apparatus 5.

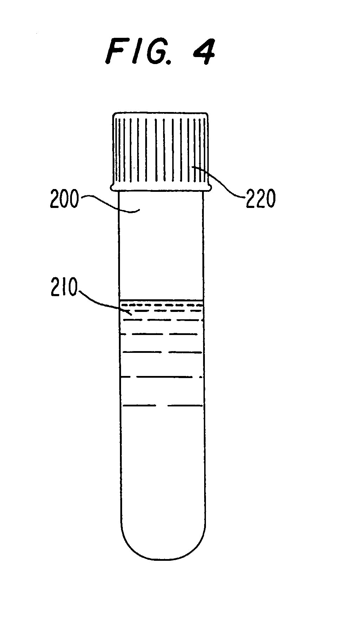

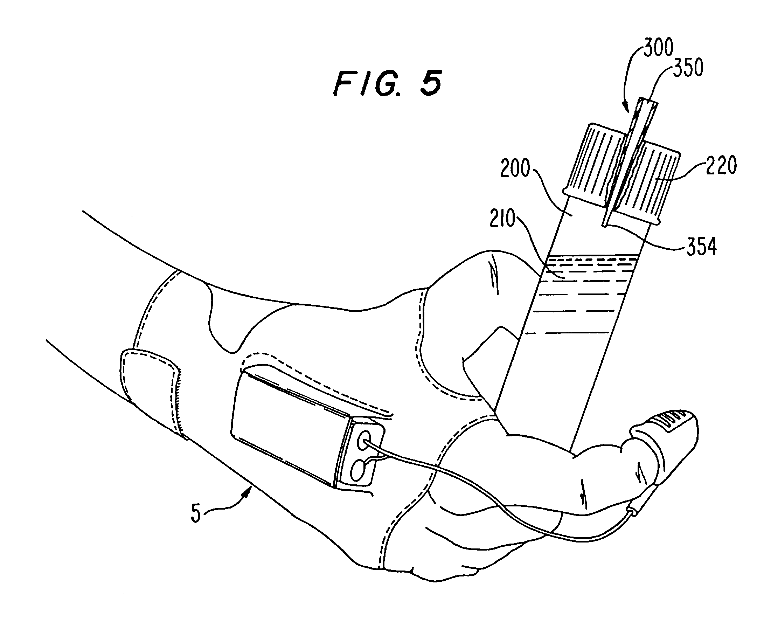

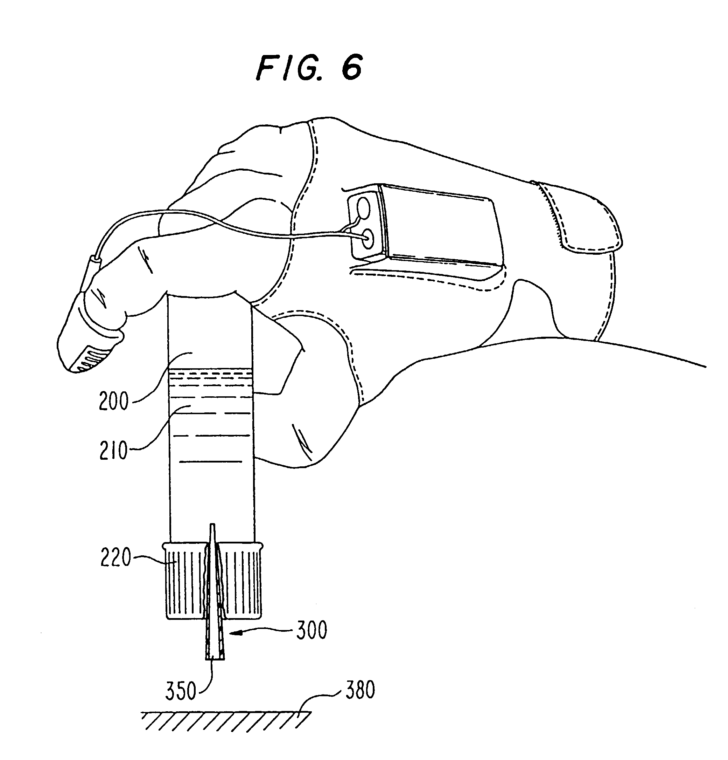

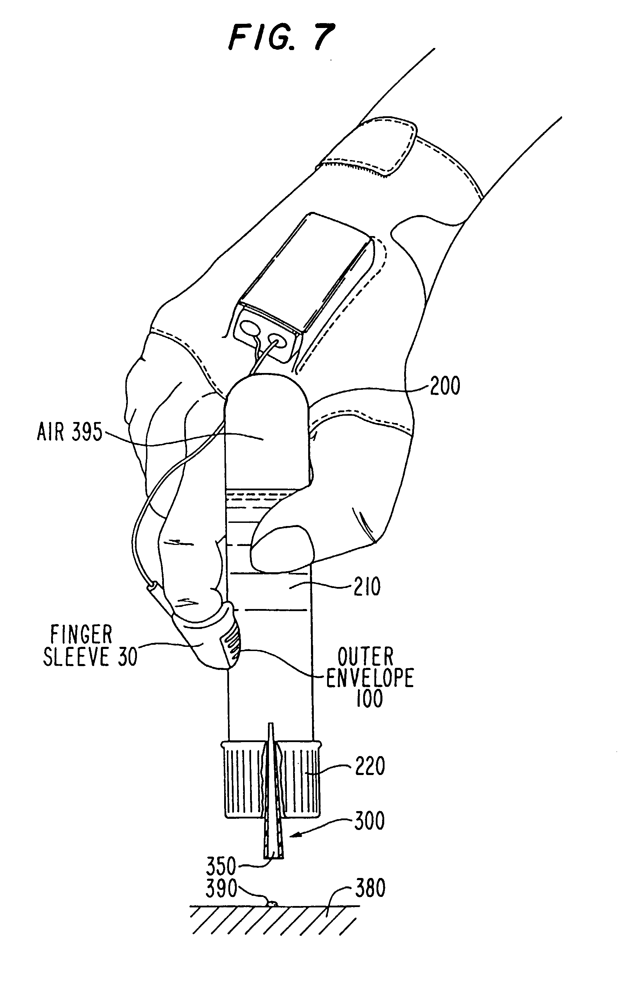

Referring to Figures 4, 5, 6 and 7, a test tube 200 contains liquid 210 which may be blood that is suspected to contain a disease or infection, including the HIV virus. A rubber stopper 220 seals the test tube to prevent accidental spillage and to prevent contamination of the liquid 210. A technician holds the test tube 200 and a cannula 300 is placed through the rubber stopper 220. This cannula 300 has a hollow channel 350 bored or formed therein and a pointed tip 354 to pierce through the rubber stopper 220. Alternatively, the stopper 220 may have a preformed hole therein for allowing insertion of the cannula 300. As used herein, the term "pierce" is intended to cover all methods of inserting the cannula 300 through the rubber stopper 220. and includes both manual insertion of the cannula and insertion with a mechanized apparatus.

After the cannula is inserted through the stopper, the test tube 200 is inverted but the pressure inside of the test tube is equal to the pressure outside the test tube and no liquid is dispensed. The outer envelope 100 of the finger sleeve 30 is then placed in contact with the outer surface of the test tube 200. Heat from heating surface 70 is conducted onto the outer surface of the test tube 200. This heat is transferred though the wall of the test tube 200 and conducted to the liquid 210 within the test tube 200 to the liquid 210 which expands, causing an increase in pressure inside the test tube 200. A pressure differential is created between the inside and outside of the test tube 200, which forces liquid 210 to flow through channel 350 onto surface 380 as a sample 390. The apparatus and method include heating an air pocket 395 in the test tube in addition to, or instead of, heating the liquid 210. The expansion of heated air causes the creation of a pressure differential and forces liquid 210 through the channel 350.

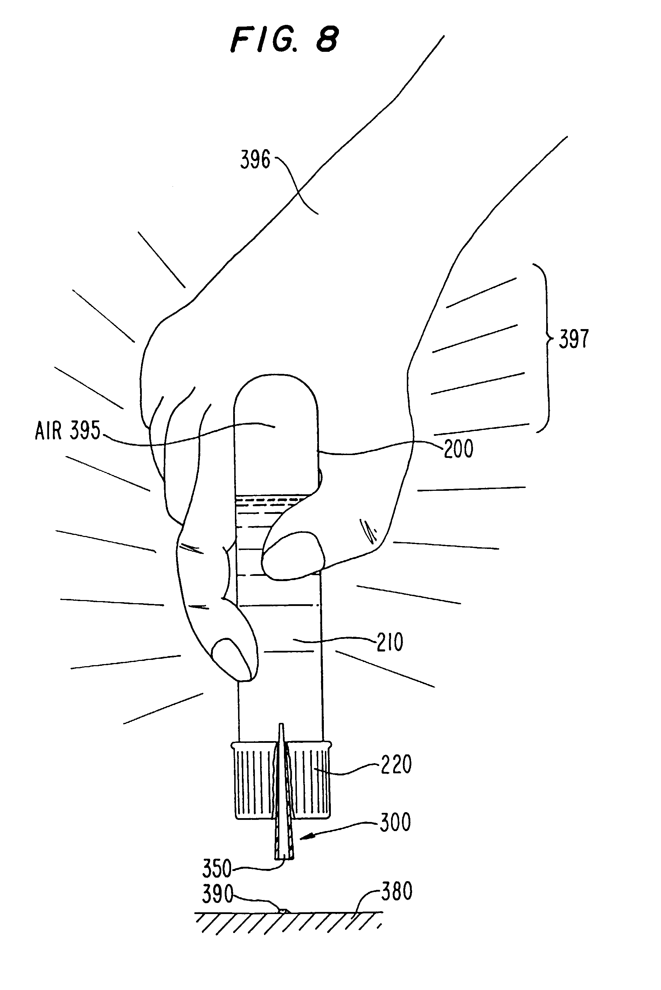

Referring to Figure 8, the heating apparatus 5 has been eliminated and the technician holds the test tube 200. The body heat 397 from the hand of the technician heats the contents of the test tube 200, particularly the air pocket 395 and liquid 210. The resulting pressure differential forces sample liquid through channel 350. As a result, a sample 390 is disposed onto surface 380. When the test tube and its contents are at room temperature, a human hand wrapped around the test tube can provide a sufficient temperature differential to cause liquid to flow through the cannula 300. However, it may be desirable to increase the temperature differential. To accomplish this procedure, the test tube and its contents may be stored in a refrigerator. The resulting temperature differential when the refrigerated test tube 200 (containing refrigerated liquid 210) is held by a human hand will be higher than if the test tube 200 and liquid 210 were at room temperature. The refrigeration method may also be used to increase the effectiveness of dispensing a liquid sample when using the heating apparatus 5, as described with respect to Figures 4, 5, 6, and 7.

## Claims

1. A method of dispensing a liquid sample (390) from within a container (200) closed by a stopper (220) at one end comprising the steps of:
piercing the stopper (220) with a cannula (300) to equalize the pressure inside the container (200) with the pressure external to the container (200); and
increasing the pressure inside the container (200) relative to the pressure external to the container (200) by creating a flame-free temperature differential between the inside of the container (200) and the outside of the container (200), thereby causing at least some of the liquid to flow through the cannula (300).

2. A method as claimed in claim 1, in which the step of creating a flame-free temperature differential includes transferring heat from a human hand to the container (200).

3. A method as claimed in claim 1 or 2, further comprising, prior to the step of increasing the pressure inside the container (200), the step of cooling the container (200).

4. A method as claimed in claim 1, 2 or 3, in which the step of creating a flame-free temperature differential comprises conducting electrical power to heat the container (200).

5. An apparatus for generating heat, for heating a test tube (200) comprising:
an electrically actuated, flame-free heating element (70) for contacting the test tube (200);
a power source (60), in electrical communication with the flame-free heating element (70); and
a thermally insulated support (30,100,110,120) for the flame-free heating element (70).

6. Apparatus as claimed in claim 5, in which the thermally insulated support (30,100,110,120) is part of a glove (10).

7. Apparatus as claimed in claim 5, in which the glove (10) includes a storage compartment (50) for holding the power source (60).

8. Apparatus as claimed in any of claims 5, 6 or 7, in which the flame-free heating element (70) is an electrical resistance heater.
